# EUROPEAN PATENT SPECIFICATION

(11) **EP 3 491 580 B1**
(45) Date of publication and mention of the grant of the patent: **25.10.2023**
(21) Application number: 17751609.3
(22) Date of filing: 27.07.2017
(51) Int. Cl.: G06V 30/142, G06V 30/32

(54) **SYSTEM AND METHOD FOR BEAUTIFYING SUPERIMPOSED DIGITAL INK**
SYSTEM UND VERFAHREN ZUR VERSCHÖNERUNG VON ÜBERLAGERTER DIGITALER TINTE
SYSTÈME ET PROCÉDÉ POUR EMBELLIR UNE ENCRE NUMÉRIQUE SUPERPOSÉE

(30) Priority: 29.07.2016 EP 16290146; 27.01.2017 US 201715417576
(43) Date of publication of application: 05.06.2019
(73) Proprietor: MyScript, 44339 Nantes Cedex 3 (FR)
(72) Inventor: CHARLES, Pierre-Damien, 44339 Nantes Cedex 3 (FR); BAUDRY, Edgard, 44339 Nantes Cedex 3 (FR); GOURRAUD, Bertrand, 44339 Nantes Cedex 3 (FR)
(74) Representative: Müller-Boré & Partner Patentanwälte PartG mbB
(86) International application number: PCT/EP2017/000913
(87) International publication number: WO 2018/019425

(56) References cited:
- US-A- 5 396 566
- US-A1- 2007 003 142
- US-A1- 2015 169 975
- US-A1- 2015 286 886
- US-A1- 2016 147 723

## Description

### CROSS-REFERENCE TO RELATED APPLICATIONS

This application claims priority to EP 16 290 146.6, filed July 29, 2016, and to U.S. Application No. 15/417,576, filed January 27, 2017.

### TECHNICAL FIELD

The present description relates generally to the field of handwriting recognition systems and methods using computing device interfaces. The present description relates more specifically to systems and methods for beautifying digital ink rendered from superimposed handwriting input to such computing device interfaces.

### BACKGROUND

Computing devices continue to become more ubiquitous to daily life. They take the form of computer desktops, laptop computers, tablet computers, hybrid computers (2-in-1s), e-book readers, mobile phones, smartphones, wearable computers, global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally consist of at least one processing element, such as a central processing unit (CPU), some form of memory, and input and output devices. The variety of computing devices and their subsequent uses necessitate a variety of interfaces and input devices. One such input device is a touch sensitive surface such as a touch screen or touch pad wherein user input is received through contact between the user's finger or an instrument such as a pen or stylus and the touch sensitive surface. Another input device is an input interface that senses gestures made by a user above the input interface. A further input device is a position detection system which detects the relative position of either touch or non-touch interactions with a non-touch physical or virtual surface. Any of these methods of input can be used generally for drawing or inputting text. The user's handwriting is interpreted using a handwriting recognition system or method.

One application of handwriting recognition in non-portable computing devices, such as in-vehicle control and entertainment systems, and in portable computing devices, such as smartphones, phablets and tablets, is for the input of text into various applications run by the computing devices in a manner similar to that traditionally done with keyboard, either physical or virtual, and voice. However, unlike keyboard input which is governed by strict layout rules, such as text entry on visible or invisible lines in accordance with the position of a displayed cursor, handwriting can be input virtually anywhere on the input interface of the device. Further, unlike voice input for text input, which generally involves speech-to-text conversion, handwriting for text input typically involves conversion of so-called 'digital ink', being the rendered display of the users handwriting or 'raw ink', into typed or 'typeset ink' with associated typesetted structure.

The substantially unconstrained input of handwriting has some effect on the users' ability to interact with the input once it has been rendered as digital ink. This is because, unlike typeset ink text which has characters relatively located in a uniform and known manner, the characters of the digital ink text are not uniform or in relatively known positions, generally due to the irregularity inherent in handwriting. Accordingly, conventional systems and methods typically only allow further interaction to be made on the typeset ink rendered from the recognized text. The conversion to the typeset ink also has problems with respect to interpretation of the relatively free positioning of the digital ink.

These problems of conversion and interaction are exacerbated in certain use environments and cases involving relatively small input interfaces, such as wearables and smartphones, and/or lack of visibility of the interface during input, such as in automotive environments and use cases involving entry during motion, such as performed on smartphones by so-called "petextrians", e.g., input on screen during walking. For example, in automotive use cases, the driver may not be able to look at the input interface to see what they are typing or writing during driving. Typically, voice recognition systems have been used for such use cases. However, the inherent noisy environment of driving can make such systems inaccurate and ineffective. The same can be said for public use environments which are inherently noisy or require quiet.

For such uses cases handwriting recognition systems that allow input of superimposed handwritten characters in script and cursive or linked form have been developed by the present Applicant and Assignee. These systems are described in United States Patent Publication Nos. 2015/0286886 and 2015/0356360 filed in the name of the present Applicant and Assignee, These systems provide accurate recognition of the input of text and non-text content and commands using superimposed handwriting, That is, at least some of the handwriting is overlaid on previous handwriting on the input interface. This allows a relatively small interface footprint and the ability of users to handwrite without regard to the position of that handwriting, such that 'no-look' input is supported. The following documents were also found:
D1 US 2016/147723 A1 (LEE DONG-HYUK [KR] ET AL) 26 May 2016 (2016-05-26)
D2 US 2015/169975 A1 (KIENZLE WOLF [US] ET AL) 18 June 2015 (2015-06-18)
D1 discloses handwriting recognition using geometrical information and a structuring operation to align the plurality of characters in a non-superimposed order (in particular §0171), followed by displaying them. D1 does not disclose a combination of three experts and not (specifically) the use of character width to structure the alignment of the output.

D2 also discloses handwriting and deals with overlapping strokes by structuring the segmented characters and words to have an interspacing of a stoke width (§0078).

It is desired to allow users to view the input, so they know that it was recognized accurately, so they can later read the input for further input using non-superimposed handwriting, for example, or so they can interact with their handwriting to edit or add to the input (e.g., add or delete characters or words). Some available applications provide alignment of digital ink through normalization and the like. However, these do not take into account certain geometrical features of the handwriting and therefore the aligning is not properly performed to allow faithful reproduction of the original digital ink or full interaction with it. Further, they do not use recognition to provide these operations, and as such do not provide interaction capabilities within the input signal. Accordingly, later interaction editing can only be performed at the word level, not at the character level, for example.

### SUMMARY

The examples of the present disclosure that are described herein below provide methods, systems and a computer program product for use in recognizing superimposed handwriting on computing devices.

In some implementations, the present invention provides a system, method and storage medium in accordance with the independent claims.

The first geometrical information is determined from widths of at least some of the characters.

The structuring transformation is determined to include at least inter-character spacing between at least some of the characters, the inter-character spacing may be defined by the determined widths.

The structuring transformation may be determined to include inter-word spacing between words defined by at least some of the characters, the inter-word spacing may be defined by the determined widths.

The at least one non-transitory computer readable medium may be configured to determine second geometrical information of the characters, wherein the structuring transformation may be determined in accordance with the first and second geometrical information.

The second geometrical information may be determined from typography parameters of at least some of the characters.

The at least one non-transitory computer readable medium may be configured to determine third geometrical information of an alignment structure of the display interface, wherein the structuring transformation is determined in accordance with the first, second and third geometrical information so that the digital ink is displayed in accordance with the alignment structure.

The alignment structure may be a line pattern, and the third geometrical information may be determined from typography parameters of the line pattern.

The structuring transformation may be determined to include inter-word spacing between words defined by at least some of the characters, the inter-word spacing may be defined by the determined widths.

The method may further comprise determining second geometrical information of the characters, wherein the structuring transformation may be determined in accordance with the first and second geometrical information.

The second, geometrical information may be determined from typography parameters of at least some of the characters.

The method may further comprise determining third geometrical information of an alignment structure of the display interface, wherein the structuring transformation may be determined in accordance with the first, second and third geometrical information so that the digital ink is displayed in accordance with the alignment structure.

The structuring transformation may be determined to include inter-word spacing between words defined by at least some of the characters, the inter-word spacing may be defined by the determined widths.

The non-transitory computer readable medium may further comprise determining second geometrical information of the characters, wherein the structuring transformation may be determined in accordance with the first and second geometrical information.

The second geometrical information may be determined from typography parameters of at least some of the characters.

The non-transitory computer readable medium may further comprise determining third geometrical information of an alignment structure of the display interface, wherein the structuring transformation may be determined in accordance with the first, second and third geometrical information so that the digital ink is displayed in accordance with the alignment structure.

The alignment structure may be a line pattern, and the third geometrical information may be determined from typography parameters of the line pattern.

### BRIEF DESCRIPTION OF THE DRAWINGS

The present system and method will be more fully understood from the following detailed description of the examples thereof, taken together with the drawings. In the drawings like reference numerals depict like elements. In the drawings:
FIG. 1 shows a block diagram of a computing device in accordance with an example of the present system and method;
FIG. 2 shows a block diagram of a system for handwriting recognition in accordance with an example of the present system and method;
FIG. 3 shows a block diagram illustrating detail of the handwriting recognition system of FIG. 2 in accordance with an example of the present system and method;
FIG. 4 shows a block diagram illustrating detail of the handwriting recognition system of FIG. 2 in accordance with another example of the present system and method;
FIG. 5 shows example superimposed handwritten input as input to an input interface of a computing device;
FIG. 6 shows example superimposed handwritten input as input to the input interface;
FIG. 7 shows example superimposed handwritten input as input to the input interface;
FIG. 8 shows the example inputs of FIGS. 5-7 superimposed on one another handwritten input as input to the input interface;
FIGS. 9A-9C shows individual characters of the input of FIG. 5 in isolation;
FIGS. 9D-9F shows individual characters of the input of FIG. 6 in isolation;
FIGS. 9G-9J shows individual characters of the input of FIG. 7 in isolation;
FIG. 10 shows example constructed input constructed from the inputs of FIGS. 5-7;
FIG. 11 shows a schematic view of an example visual rendering of an ink input and display area on at least a portion of the input interface having the constructed input of FIG. 10 rendered as digital ink;
FIG. 12 shows example reconstructed input reconstructed from the inputs of FIGS. 5-7;
FIG. 13 shows a schematic view of the ink input and display area having the reconstructed input of FIG. 12 rendered as digital ink;
FIG. 14 shows a schematic view of the ink input and display area having example geometrical information of a display line pattern depicted;
FIG. 15 shows example reconstructed input reconstructed from the inputs of FIGS. 5-7; and
FIG. 16 shows a schematic view of the ink input and display area having the reconstructed input of FIG. 15 rendered as digital ink.

### DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference to and discussion of directional features such as up, down, above, below, lowest, highest, horizontal, vertical, etc., are made with respect to the Cartesian coordinate system as applied to the input interface on which the input to be recognized is made. Further, the use of the term 'text' in the present description is understood as encompassing all alphanumeric characters, and strings thereof, in any written language and common place non-alphanumeric characters, e.g., symbols, used in written text. Furthermore, the term 'non-text' in the present description is understood as encompassing freeform handwritten content and rendered text and image data, as well as non-alphanumeric characters, and strings thereof, and alphanumeric characters, and strings thereof, which are used in non-text contexts.

The various technologies described herein generally relate to capture, processing and management of handwritten content on portable and non-portable computing devices in a manner which allows conversion of that content into publishable documents. The systems and methods described herein may utilize recognition of users' natural writing or drawing styles input to a computing device via an input interface, such as a touch sensitive screen, connected to, or of, the computing device or via an input device, such as a digital pen or mouse, connected to the computing device. Whilst the various examples are described with respect to recognition of handwriting input using so-called online recognition techniques, it is understood that application is possible to other forms of input for recognition, such as offline recognition in which images rather than digital ink are recognized.

The terms hand-drawing and handwriting are used interchangeably herein to define the creation of digital content by users through use of their hands either directly onto a digital or digitally connected medium or via an input tool, such as a hand-held stylus. The term "hand" is used herein to provide concise description of the input techniques, however the use of other parts of a users' body for similar input is included in this definition, such as foot, mouth and eye.

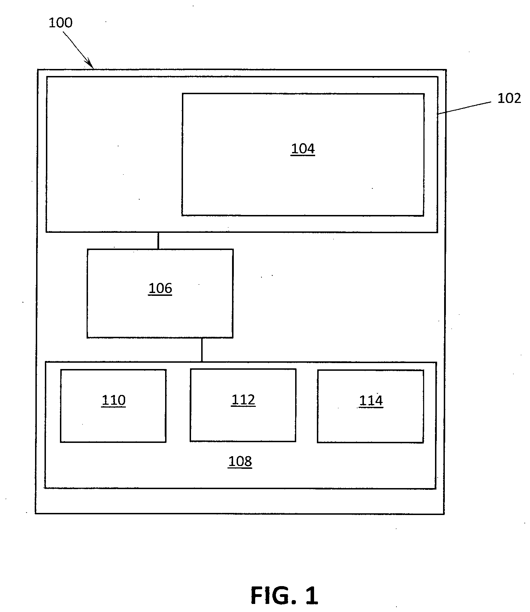

FIG. 1 shows a block diagram of an example computing device 100. The computing device may be a computer desktop, laptop computer, tablet computer, hybrid computers (2-in-1s), e-book reader, mobile phone, smartphone, wearable computer, digital watch, interactive whiteboard, global positioning system (GPS) unit, enterprise digital assistant (EDA), personal digital assistant (PDA), game console, or the like. The computing device 100 includes components of at least one processing element, some form of memory and input and/or output (I/O) devices. The components communicate with each other through inputs and outputs, such as connectors, lines, buses, cables, buffers, electromagnetic links, networks, modems, transducers, IR ports, antennas, or others known to those of ordinary skill in the art.

The illustrated example of the computing device 100 has at least one display 102 for outputting data from the computing device such as images, text, and video. The display 102 may use LCD, plasma, LED, iOLED, CRT, or any other appropriate technology that is or is not touch sensitive as known to those of ordinary skill in the art. At least some of the display 102 is co-located with at least one input interface 104. The input interface 104 may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input interface 104 may be bounded by a permanent or video-generated border that clearly identifies its boundaries. Instead of, or additional to, an on-board display, the computing device 100 may have a projected display capability.

The computing device 100 may include one or more additional I/O devices (or peripherals) that are communicatively coupled via a local interface. The additional I/O devices may include input devices such as a keyboard, mouse, scanner, microphone, touchpads, bar code readers, laser readers, radio-frequency device readers, or any other appropriate technology known to those of ordinary skill in the art. Further, the I/O devices may include output devices such as a printer, bar code printers, or any other appropriate technology known to those of ordinary skill in the art. Furthermore, the I/O devices may include communications devices that communicate both inputs and outputs such as a modulator/demodulator (modem; for accessing another device, system, or network), a radio frequency (RF) or other transceiver, a telephonic interface, a bridge, a router, or any other appropriate technology known to those of ordinary skill in the art. The local interface may have additional elements to enable communications, such as controllers, buffers (caches), drivers, repeaters, and receivers, which are omitted for simplicity but known to those of skill in the art. Further, the local interface may include address, control, and/or data connections to enable appropriate communications among the other computer components.

The computing device 100 also includes a processor 106, which is a hardware device for executing software, particularly software stored in memory 108. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 108 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 108 may incorporate electronic, magnetic, optical, and/or other types of storage media. The memory 108 can have a distributed architecture where various components are situated remote from one another but can also be accessed by the processor 106. Further, the memory 108 may be remote from the device, such as at a server or cloud-based system, which is remotely accessible by the computing device 100. The memory 108 is coupled to the processor 106, so the processor 106 can read information from and write information to the memory 108. In the alternative, the memory 108 may be integral to the processor 106. In another example, the processor 106 and the memory 108 may both reside in a single ASIC or other integrated circuit.

The software in the memory 108 includes an operating system 110 and an ink management system 112 in the form of a non-transitory computer readable medium having a computer readable program code embodied therein. The software optionally further includes a handwriting recognition (HWR) system 114 which may each include one or more separate computer programs. Each of these has an ordered listing of executable instructions for implementing logical functions. The operating system 110 controls the execution of the ink management system 112 (and the HWR system 114). The operating system 110 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the ink management system 112 of the present system and method may be provided without use of an operating system.

The ink management system 112 includes one or more processing elements related to detection, management and treatment of user input (discussed in detail later). The software may also include one or more other applications related to handwriting recognition, different functions, or both. Some examples of other applications include a text editor, telephone dialer, contacts directory, instant messaging facility, computer-aided design (CAD) program, email program, word processing program, web browser, and camera. The ink management system 112, and the other applications, include program(s) provided with the computing device 100 upon manufacture and may further include programs uploaded or downloaded into the computing device 100 after manufacture.

The HWR system 114, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Alternatively, the HWR system 114 may be a method or system for communication with a handwriting or mixed input recognition system remote from the device, such as server or cloud-based system, but is remotely accessible by the computing device 100 through communications links using the afore-mentioned communications I/O devices of the computing device 100. Further, the ink management system 112 and the HWR system 114 may operate together or be combined as a single application. Further still, the ink management system 112 and/or the HWR system 114 may be integrated within the operating system 110.

Strokes entered on or via the input interface 104 are processed by the processor 106 as digital ink. A user may enter a stroke with a finger or some instrument such as a pen or stylus suitable for use with the input interface. The user may also enter a stroke by making a gesture above the input interface 104 if technology that senses or images motion in the vicinity of the input interface 104 is being used, or with a peripheral device of the computing device 100, such as a mouse or joystick, or with a projected interface, e.g., image processing of a passive plane surface to determine the stroke and gesture signals.

A stroke is characterized by at least the stroke initiation location, the stroke termination location, and the path connecting the stroke initiation and termination locations. Further information such as timing, pressure, angle at a number of sample points along the path may also be captured to provide deeper detail of the strokes. Because different users may naturally write the same object, e.g., a letter, a shape, a symbol, with slight variations, the HWR system accommodates a variety of ways in which each object may be entered whilst being recognized as the correct or intended object.

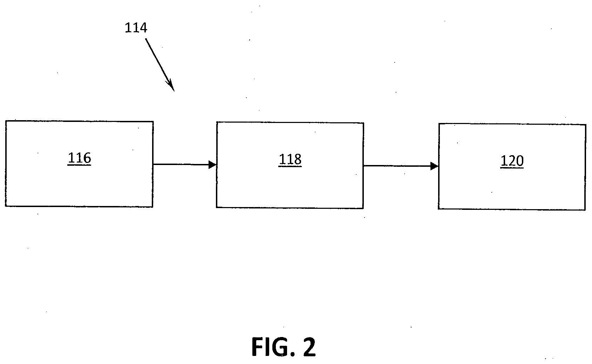

FIG. 2 is a schematic pictorial of an example of the HWR system 114, in either its local (i.e., loaded on the device 100) or remote (i.e., remotely accessible by the device 100) forms. The HWR system 114 includes stages such as preprocessing 116, recognition 118 and output 120. The preprocessing stage 116 processes the digital ink to achieve greater accuracy and reducing processing time during the recognition stage 118. This preprocessing may include normalizing of the path connecting the stroke initiation and termination locations by applying size normalization and/or methods such as B-spline approximation to smooth the input. The preprocessed strokes are then passed to the recognition stage 118 which processes the strokes to recognize the objects formed thereby. The recognized ink objects are then output 120 to the ink management system 112 for further processing and/or display.

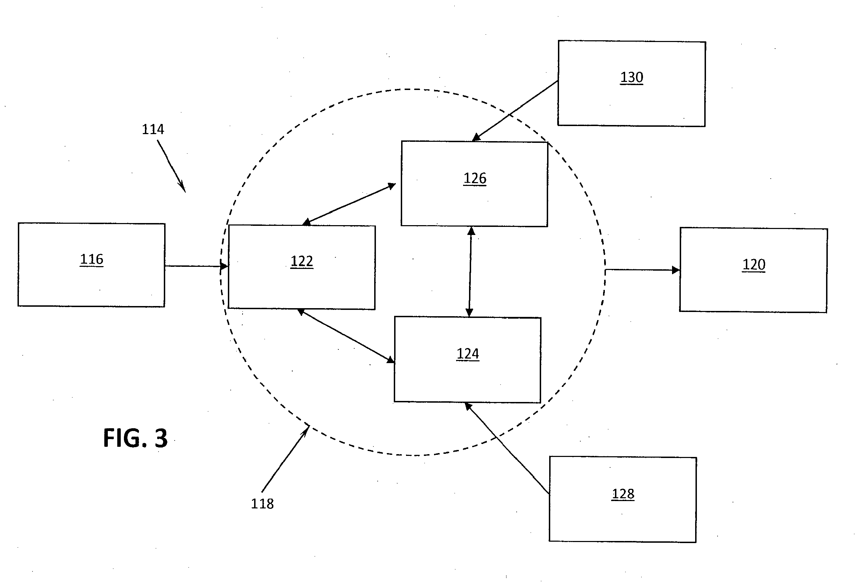

The recognition stage 118 includes different processing elements or experts. FIG. 3 is a schematic pictorial of the example of FIG. 2 showing schematic detail of the recognition stage 118. Three experts, a segmentation expert 122, a recognition expert 124, and a language expert 126, are illustrated which collaborate through dynamic programming to generate the output 120.

The segmentation expert 122 defines the different ways to segment the input strokes into individual element hypotheses, e.g., alphanumeric characters and mathematical operators, text characters, individual shapes, or sub expression, in order to form expressions, e.g., words, mathematical equations, or groups of shapes. For example, the segmentation expert 122 may form the element hypotheses by grouping consecutive strokes of the original input to obtain a segmentation graph where each node corresponds to at least one element hypothesis and where adjacency constraints between elements are handled by the node connections. Alternatively, the segmentation expert 122 may employ separate experts for different input types, such as text, drawings, equations, and music notation. Nodes of the graph are considered adjacent if the corresponding hypotheses have no common stroke but whose strokes are consecutive in the original input.

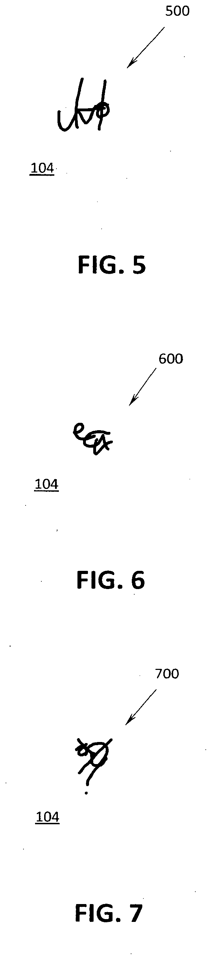

The segmentation expert 122 is not limited to handprint writing input where each individual character is separated from its neighbor characters with a pen-up (such as shown in FIG. 5 discussed later), but is also able to process cursive writing where attached characters are written one over the other. When interpreting cursive user input, the segmentation expert 122 segments each stroke based on a detection of particular points defining locations for breaking a stroke into its constituting segments. The particular points for breaking a stroke into its constituting segments may be defined by crossing points, a change in the slope of stroke path, etc. These constituting segments are used to construct the segmentation graph. The segmentation expert 122 may thus be configured to operate as described in the reference United States Patent Publication No. 2015/0286886.

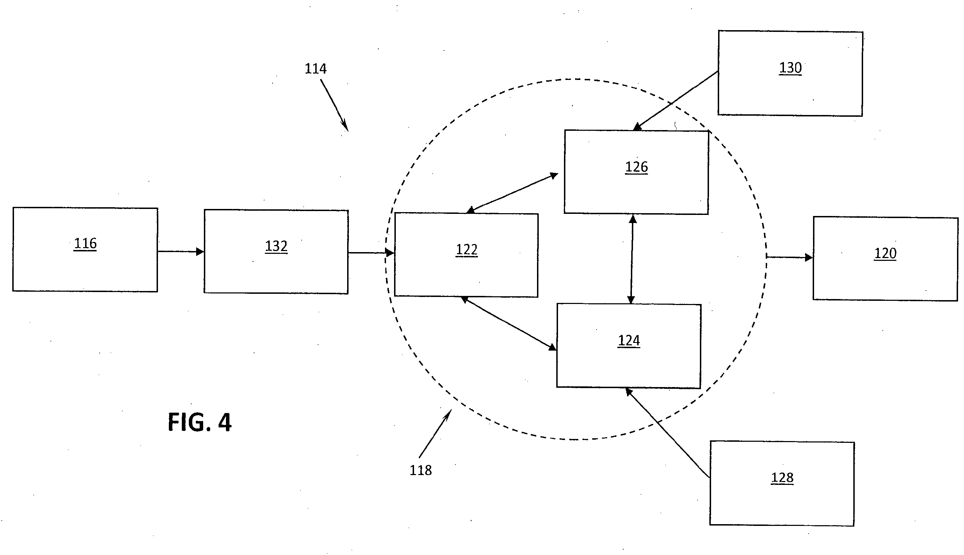

Alternatively, with respect to cursive input, the HWR system 114 may further be configured to operate as described in the reference United States Patent Publication No. 2015/0356360. This alternative configuration is shown in FIG. 4, in which in order to present the preprocessed 116 strokes to the recognition engine 118 for efficient recognition processing of cursive input, the HWR system 114 further employs superimpose classification 132 of the preprocessed 116 (or non-preprocessed; if the preprocessor 116 is not utilized) input which classifies the superimposition of cursive, and non-cursive, characters within the input and passes this classified input to the segmentation expert 122 of the recognition engine 118. In this example, the superimpose classifier 132 may be configured to operate as described in the afore-incorporated by reference United States Patent Publication No. 2015/0356360.

The recognition expert 124 provides classification of the features extracted by a classifier 128 and outputs a list of element candidates with probabilities or recognition scores for each node of the segmentation graph. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task.

The language expert 126 generates linguistic meaning for the different paths in the segmentation graph using language models (e.g., grammar or semantics). The expert 126 checks the candidates suggested by the other experts according to linguistic information 130. The linguistic information 130 can include a lexicon, regular expressions, etc. and is the storage for all static data used by the language expert 126 to execute a language model. A language model can rely on statistical information on a given language. The linguistic information 130 is computed off-line, with or without adaption according to the results of recognition and user interactions, and provided to the linguistic expert 126.

The language expert 126 aims at finding the best recognition path. In one example, the language expert 126 does this by exploring a language model such as final state automaton (FSA) representing the content of linguistic information 130. In addition to the lexicon constraint, the language expert 126 may use a language model with statistical information modeling for how frequent a given sequence of elements appears in the specified language or is used by a specific user to evaluate the linguistic likelihood of the interpretation of a given path of the segmentation graph.

The present system and method may make use of the HWR system 114 in order to recognize handwritten input to the device 100. As discussed earlier, unlike keyboard input which is governed by strict layout rules, such as text entry on visible or invisible lines in accordance with the position of a displayed cursor, the present system and method allows handwriting to be input virtually anywhere as superimposed handwriting on the input interface 104 of the computing device 100. This superimposed or 'free' input may be rendered as digital ink in the input position, or in an offset position if the handwriting input is offset from the rendering position, at least temporarily so that the user understands that the input has been received.

The HWR system 114 is able to recognize this relatively freely positioned and superimposed handwriting as described above. The present system and method displays the original input (i.e., the raw ink) in its original format (i.e., in digital ink) as if it would have been input on a piece of paper or larger input interface, for example. Redisplay of the digital ink, such as 'untangling' of superimposed characters, is made with or without typeset ink conversion. In this way, the present system and method allows users to interact with the digital ink itself and provide meaningful guidance and results of that interaction through beautifying of the digital ink.

Beautification may be achieved by properly aligning the digital ink in accordance, for example, with an alignment structure of the input interface 104 or the input interface 104 itself by taking into account certain geometrical features of the handwriting, and of the display is desired (described in detail later). These and other aspects of the present system and method are now described.

FIG. 5 shows superimposed handwritten input 500 as input to the input interface 104 as received by the ink management system 112 of the present system and method. The superimposed handwritten input 500 includes several individual text characters at least partially superimposed or overlapping on one another.

FIG. 6 shows superimposed handwritten input 600 as input to the input interface 104 as received by the ink management system 112. The superimposed handwritten input 600 includes several individual text characters at least partially superimposed or overlapping on one another.

FIG. 7 shows superimposed handwritten input 700 as input to the input interface 104 as received by the ink management system 112. The superimposed handwritten input 700 includes several individual text characters at least partially superimposed or overlapping on one another.

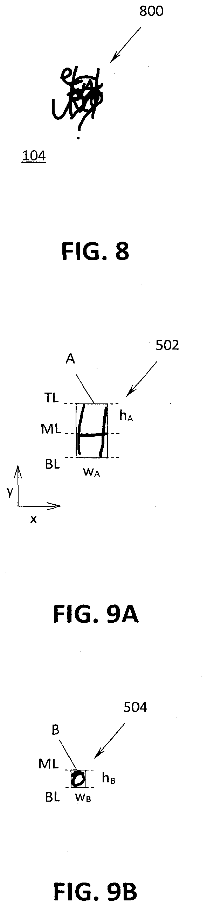

The superimposed handwritten inputs 500, 600 and 700 of this example are sequential inputs of content, such as words. Each of the superimposed inputs may be at least temporarily displayed on the input interface 104, or more generally on the display 102, rendered as (first) digital ink having the form as depicted in FIGS. 5-7. For example, the digital ink may be rendered for a certain amount of time, such as about 0.2 second to about 1.0 second and then faded out. In this way, the display is maintained relatively uncluttered during input. Otherwise, a display of digital ink 800 being the combination of all the inputs 500, 600 and 700 would result as shown in FIG. 8.

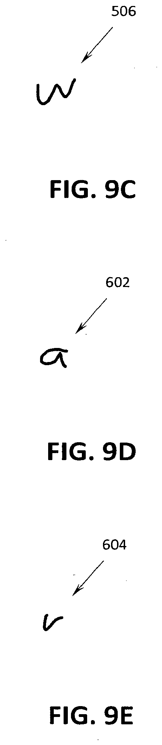

As can be seen, the legibility of the inputs 500, 600 and 700 is very low, since the individual characters are not readily ascertainable. FIGS. 9A-9J sequentially show each individual character of the inputs 500, 600 and 700 in isolation. That is, FIG. 9A shows a character 502 of the input 500 which has been input as multiple, i.e., three, handwritten strokes to form the text character "H". FIG. 9B shows a character 504 of the input 500 which has been input as a single handwritten stroke to form the text character "o" . FIG. 9C shows a character 506 of the input 500 which has been input as a single handwritten stroke to form the text character "w". As such, the superimpose input 500 constitutes the capitalized word "How".

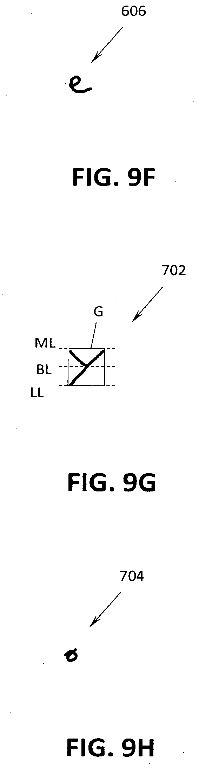

Further, FIG. 9D shows a character 602 of the input 600 which has been input as a single handwritten stroke to form the text character "a" . FIG. 9E shows a character 604 of the input 600 which has been input as a single handwritten stroke to form the text character "r". FIG. 9F shows a character 606 of the input 600 which has been input as a single handwritten stroke to form the text character "e". As such, the superimpose input 600 constitutes the word "are".

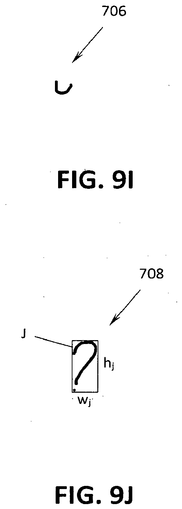

FIG. 9G shows a character 702 of the input 700 which has been input as multiple, i.e., two, handwritten strokes to form the text character "y". FIG. 9H shows a character 704 of the input 700 which has been input as a single handwritten stroke to form the text character "o". FIG. 9I shows a character 706 of the input 700 which has been input as a single handwritten stroke to form the text character "u". FIG. 9J shows a character 708 of the input 700 which has been input as multiple, i.e., two, handwritten strokes to form the grammatical or punctuation character or symbol "?". As such, the superimpose input 700 constitutes the word "you" followed by a question mark.

As described earlier, the ink management system 112 causes the HWR system 114 to recognize the handwritten strokes of the inputs 500, 600 and 700 (or 800), and through the recognition processing described earlier, the HWR system 114 recognizes the characters of FIGS. 9A-9J and more specifically the words and other symbols, such as grammatical marks, formed thereby. As such, the HWR system 114 recognizes the collected handwritten inputs 500, 600 and 700 as forming the question phrase "How are you?".

In the present system and method, this recognized output is rendered on the display 102, for example, by the ink management system 112 through application of a structuring transformation on the strokes of the input to beautify the digital ink through proper alignment (and scaling, if desired). Alternatively, or additionally, the structuring transformation may be carried out on the non-recognized input by the ink management system 112 (as described later). In either case, the structuring transformation is performed by determining information regarding the relative geometry of the handwritten input.

In the example in which structure transforming is performed on the recognized input, the ink management system 112 receives the recognition results from the output 128 of the HWR system 114, for example, via the memory 108 of the digital device 100. This recognition processed ink includes two object classes. The first object class is the segmented ink as segmented by the segmentation expert 122 with the most probable associated text (character or symbol) candidates for the ink segments which constitutes the second object class. The ink management system 112 may process these first and second object classes together with a third object class, being the raw ink itself, in order to perform the structure transformation. For example, the ink management system 112 may use the third object class to display the transformation of the structured digital ink to the user.

The characters belonging to the character or word candidates of the first object class are used by the ink management system 112 to determine the groupings of the strokes of the second object class. For example, as described earlier, the first three handwritten strokes of the input 500 are recognized as belonging to the text character "H" 502, the fourth handwritten stroke of the input 500 is recognized as belonging to the text character "o" 504, etc. The ink management system 112 may assign the handwritten strokes to each character by causing identification data for each of the strokes to be added to the data for each stroke, e.g., by including an identification tag in the metadata of the stokes.

Alternatively, or additionally, the ink management system 112 may rely on such assignments through the HWR system 114, where the HWR system 114 is configured to provide stroke indexation to form ink objects including the recognition candidates for the stroke groups, as described in United States Patent Application No. 15/083,195 titled "System and Method for Digital Ink Interactivity" filed claiming a priority date of 7 Jan 2016 in the name of the present Applicant and Assignee,

In any case, once the membership of the strokes to the different recognized characters is known, certain geometrical features of the characters can be ascertained by the ink management system 112. These geometrical features include the width of each character, the height of each character and the geometrical area of each character, where the width is defined in the x-axis and the height is defined in the y-axis as shown in FIG. 9A, for example.

For example, the three stroke character 502 illustrated in FIG. 9A is determined to have width w_{A}, height h_{A} and area defined by the illustrated box A, the single stroke character 504 illustrated in FIG. 9B is determined to have width w_{B}, height h_{B} and area defined by the illustrated box B, and the two stroke character 708 illustrated in FIG. 9J is determined to have width w_{J}, height h_{J} and area defined by the illustrated box J.

It is noted that grouping strokes into candidate characters may involve the transposed grouping of later strokes with earlier strokes that are not in sequential (time) input order. That is, in the example multi-stoke characters 502, 702 and 708, the multiple strokes forming these characters are input in sequential (time) order. However, for other characters having overlaid or disconnected strokes, some delayed strokes may be entered after the initial strokes of the characters are entered, particularly with respect to cursive or linked handwriting input. For example, for the text characters "t" and "i" the bar "-" and the "·", respectively, are entered later, for accented characters, like é, the diacritic is added later. The recognition of such delayed stroke characters may be handled by the HWR system 114, and/or the ink management system 112 as described in the afore-incorporated by reference United States Patent Publication No. 2015/0356360.

The determined geometric features of the recognized characters forming the complete recognized input, e.g., the question phrase "How are you?", are compared, or related to a common reference, by the ink management system 112 in order to determine parameters for the structural transformation. For example, the determined widths of the characters may be compared in order to determine the average width. From the average width the ink management system 112 may construct each of the handwritten strokes into the recognized input.

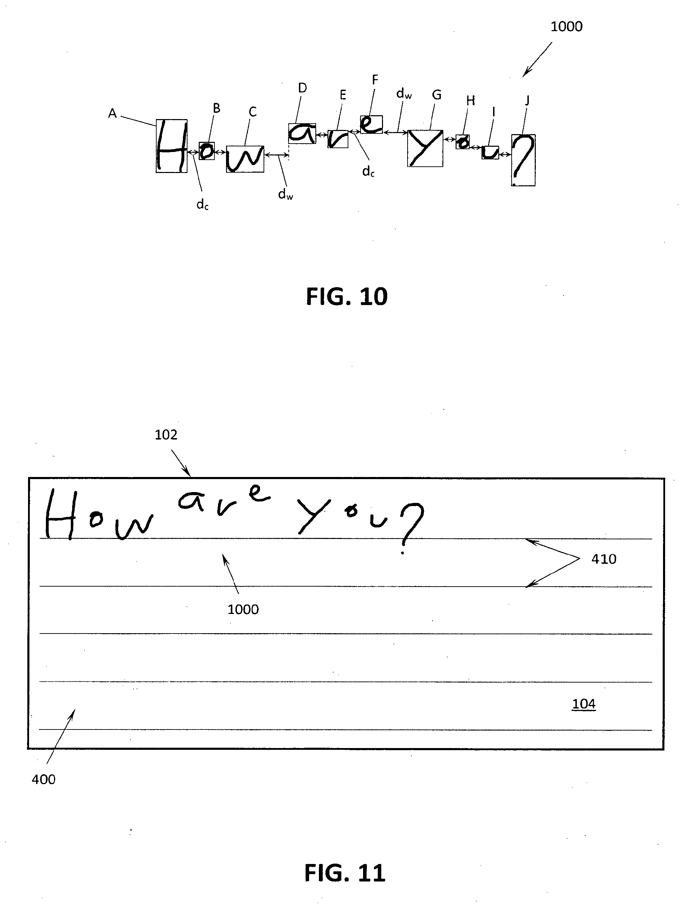

For example, as illustrated in FIG. 10, each of the characters 502-708 of the inputs 500, 600 and 700 are determined to have areas A to J, respectively, with associated widths w_{A} to w_{J} and heights h_{A} to h_{J}. It is noted that the areas A to J are shown as boxes about the respective characters; it is understood that this is for illustration purposes only and such boxes may or may not be displayed by the ink management system 112.

The ink management system 112 considers the determined widths as (first) geometrical information from which the average width dw is determined. In order to construct the recognized input, the ink management system 112 applies a scaling factor or percentage (e.g., less than 100%) to the average width dw to determine an inter-character distance of dc. For example, a scaling factor of about 0.1 to about 0.8 may be used as a pre-determined (and settable; via a user interface (UI) or the like of the ink management system 112) constant or may be dynamically set based on the average width determined.

It is understood that the scaling factor may also be set to be greater than one (i.e., greater than 100%) or to be equal to one (i.e., 100%), based on the size of the handwritten characters. Additionally, different scaling factors may be used for different parts of the handwritten text. For example, the inter-letter spacing between capitalized or upper-case letters may be desired to be larger than that between non-capitalized or lower-case letters. This may be achieved by the ink management system 112 taking the character recognition results of the raw ink into account.

In any case, the inter-character distance is used by the ink management system 112 to provide a substantially uniform separation between at least some of the recognized characters as ordered sequentially in the recognized input. For example, as shown in FIG. 10, the input is constructed as constructed (untangled or non-superimposed) input 1000 in which each of the characters 502, 504 and 506 of the recognized word "How" of the input 500 are separated by the inter-character distance dc, each of the characters 602, 604 and 606 of the recognized word "are" of the input 600 are separated by the inter-character distance dc and each of the characters 702, 704, 706 and 708 of the recognized word and grammatical mark "you?" of the input 700 are separated by the inter-character distance dc, where this separation is defined with respect to the x-axis boundaries of the boxes A to J representing the horizontal extents of each character in the illustrated example.

As can be seen, this provides a legible spacing of the characters of the constructed input 1000 which is reasonably similar to a character spacing as would be used naturally by users handwriting the recognized input in a non-superimposed fashion. Alternatively, or additionally, the ink management system 112 may apply a pre-determined (and settable) inter-character spacing parameter. However, as such a parameter is unlinked to the sizing of the actual input handwritten characters, it is possible the spacing will not appear natural, i.e., too large or too small. This may lead to users being forced to adjust the spacing manually, if allowed, and in any case impacts on the user experience.

Utilizing the scaled average width as the inter-character spacing (first alignment parameter) in the structurally transformed input provides a character spacing based on the geometrical features of the handwritten input itself. Inter-word spacing is typically larger than inter-character spacing. Accordingly, in order to construct the recognized input, the ink management system 112 uses the average width dw as the inter-word distance. This may be achieved, for example, by setting the scaling factor to one (i.e., 100%) or by omitting the scaling factor at word boundaries (determined as described later).

In this way, the inter-word distance (second alignment parameter) is used by the ink management system 112 to provide a substantially uniform separation between the recognized words as ordered sequentially in the recognized input. For example, as shown in FIG. 10, the constructed input 1000 further has each of the recognized words "How" 500, "are" 600 and "you?" 700 separated by the inter-word distance dw.

As can be seen, this provides a legible spacing of the words of the reconstructed input 1000 which is reasonably similar to a word spacing as would be used naturally by users handwriting the recognized input in a non-superimposed fashion. Alternatively, or additionally, the ink management system 112 may apply a pre-determined (and settable) inter-word spacing parameter. However, as such a parameter is unlinked to the sizing of the actual input handwritten characters and words, it is possible the spacing will not appear natural, i.e., too large or too small. This may lead to users being forced to adjust the spacing manually, if allowed, and in any case impacts on the user experience.

In order to determine in which positions of the input to apply the inter-character and inter-word spacings, the positions of the words need to be known to the ink management system 112. With respect to the recognized input, such information is provided by the HWR system 114 to the ink management system 112 as part of the recognition results of the output 120, in particular as part of the first object class. The detection of word input in superimposed handwritten input may be performed by the HWR system 114 as described in the afore-incorporated by reference United States Patent Publication No. 2015/0286886, for example.

On the other hand, in examples of the present system and method in which the structure transformation is performed on the raw input rather than recognized input, as described above, the ink management system 112 is configured to determine characters and words of the input itself in order to make the above-described geometrical parameter determinations. This may be achieved by configuring the ink management system 112 with at least partial aspects of the HWR system 114. In particular, components of the ink management system 112 with functions similar to the segmentation, recognition and language experts of the HWR system 114 may be provided in order to determine the likeliest groupings of the strokes into characters and words without performing recognition of the input itself. That is, the structural transformation of the superimposed input may be performed by the present system and method to merely rearrange the raw ink into structured ink for display to the user. This constructed input may then be recognized by a handwriting recognition process, like the HWR system 114 for example, at a later stage if desired.

Having determined the inter-character and inter-word parameters, the ink management system 112 may cause the constructed input 1000 to be displayed on the display 102 of the digital device 100. This display may be caused in response to receipt of a user request, for example, through the UI or the like of the ink management system 112 or the device 100 itself, or may be performed when input is detected.

For example, FIG. 11 shows a schematic view of an example visual rendering of an ink input and display area 400 on at least a portion of the input interface 104. The input and display area 400 may be provided as a constraint-free canvas that: displays the constructed input which has been constructed from input via the input interface 104 or other interface such as a different device or other input panel of the device 100; allows users to input non-superimposed content by handwriting, typing or other input which is displayed as digital and/or typeset ink; and allows users to interact with the displayed digital and/or typeset ink content. An alignment structure in the form of a line pattern background 410 may be provided for guidance of user input and the alignment of digital and typeset ink objects. In the present example, the ink management system 112 causes the constructed input 1000 to be displayed as rendered digital ink as shown in FIG. 11 with respect to the line pattern 410.

An example alignment pattern is described in United States Patent Application Publication No. 2017/0060819 titled "System and Method of Digital Note Taking" filed claiming a priority date of 25 August 2015 in the name of the present Applicant and Assignee, the entire content of which is incorporated by reference herein. However, other examples of the present system and method may not provide such a line pattern, particularly when further interaction and non-superimposed input to the input interface directly is not envisaged and the mere untangled display of the superimposed input is desired.

As can be seen from FIG. 11, while the constructed input 1000 is legible and easily read by users as the question phrase "How are you?", the correspondence of the characters with the line pattern 410 or more generally with a natural character alignment is not provided in a neat manner. This is because, superimposed handwriting input is typically made by users without regard to such alignment considerations. As such, the present system and method may provide further structural transformation or so-called "beautification" of the constructed input in order to provide an enhanced user experience.

In one example, beautification of the input is provided by configuring the ink management system 112 to use information on further geometrical features of the input based on recognized or determined features of the characters represented by the input and geometrical features of the display, for desired. In the example in which structure transforming is performed on the recognized input, the (second) geometrical information on the recognized characters is provided by the HWR system 114 together with the recognition results. That is, in the recognition process, the recognition engine 118 determines geometrical information related to typography of at least each of the recognized characters of the ink input.

Typography of text and punctuation characters includes several elements related to elements of text, including ascenders and descenders of letters. With respect to handwritten characters the HWR system 114 determines lower and upper extrema of each character. A lower extremum is the lowest point at which the stroke or strokes of a recognized character pass. An upper extremum is the highest point at which the stroke or strokes of a recognized character pass. From these extremum, writing lines at the levels of character, word (e.g., a series of characters), sentence or phrase (e.g., a series of characters and/or words), and text line (e.g., a series of characters, words and/or sentences) are determined. The writing lines include top-, lower-, base- and mid- (or median-) lines. In the alternative example in which the structure transformation is performed on the raw input, the ink management system 112 is configured to determine these extremum itself.

With respect to individual characters the typography information may be applied based on the type of character recognized by the HWR system 114, or otherwise determined by the ink management system 112. That is, for capitalized letters, letters having ascenders and certain punctuation marks, the top-line is defined as the horizontal line passing through a point related to the upper extremum across the horizontal extent of the character. For example, as shown in FIG. 9A the character 502 has the top-line TL defined at the upper extremum of the multiple strokes defining the capitalized letter "H" (i.e., the upper boundary of the area box A). It is noted that for capital letters, typography may also define a cap-line which is different than the top-line to allow for certain fontifications.

For letters having descenders and certain punctuation marks, the lower-line is defined as the horizontal line passing through a point related to the lower extremum across the horizontal extent of the character. For example, as shown in FIG. 9G the character 702 has the lower-line LL defined at the lower extremum of the multiple strokes defining the letter "y" (i.e., the lower boundary of the area box G).

The base-line is defined as the horizontal line passing through a point related to at least the lower-line across the horizontal extent of the character, and the mid-line is defined as the horizontal line passing through a point related to the top- and base-lines across the horizontal extent of the character. The determination of the points through which these lines pass is particular to the recognition process and language model(s) used by the HWR system 114, or the ink management system 112.

For letters having neither descenders nor ascenders and in lower case form, the mid-line is defined as the top-line and the base-line is defined as the lower-line. For example, as shown in FIG. 9B the character 504 has the mid-line ML defined at the upper extremum and the base-line BL defined at the lower extremum of the single stroke defining the letter "o" (i.e., the upper and lower boundaries of the area box B).

For capitalized letters, letters having ascenders and certain punctuation marks, the base-line is defined as the lower-line and the mid-line is defined as the horizontal line passing through a point which is the median distance between the top- and base-lines. For example, as shown in FIG. 9A the character 502 has the base-line BL defined at the lower extremum of the multiple strokes defining the capitalized letter "H" (i.e., the lower boundary of the area box A) and the mid-line ML defined mid-way between the top-line TL and the base-line BL.

For letters having descenders and certain punctuation marks, the mid-line is defined as the top-line and the base-line is defined as the horizontal line passing through a point which is the median distance, or which is defined by some other metric (such as certain geometrical features of the stoke(s) itself), between the mid- and lower-lines. For example, as shown in FIG. 9G the character 702 has the mid-line ML defined at the upper extremum of the multiple strokes defining the letter "y" (i.e., the upper boundary of the area box G) and the base-line BL defined about mid-way between the mid-line ML and the lower-line LL.

Of course, certain characters, depending on language and handwriting styles, may include both ascenders and descenders, or diacritics (such as accents), such that certain combinations or weightings of the above-described relationships are used to define the typography of the characters. Also, certain punctuation marks and other symbols may not range over more than one of the typography lines (such as full stops and hyphens), such that specific rules are applied for such characters.

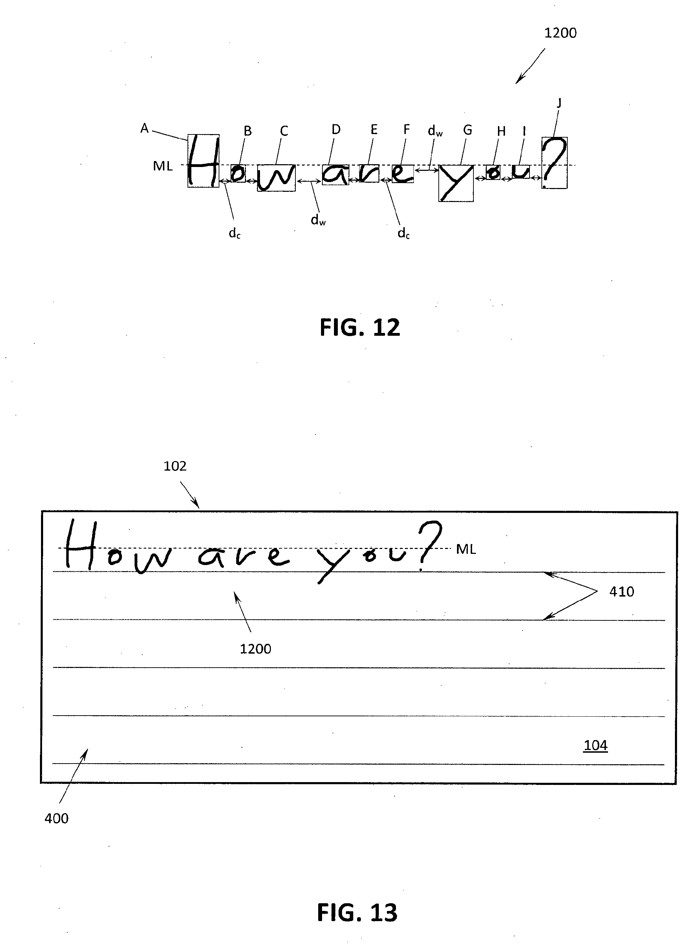

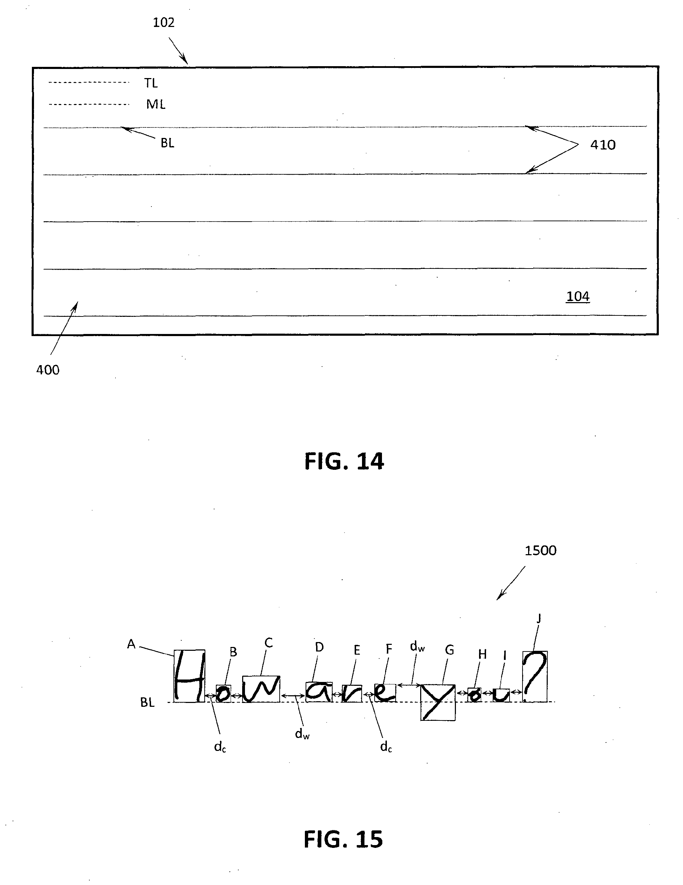

The structuring transformation employed by the ink management system 112 may utilize this (second) geometrical information of the input in a number of ways to further beautify the rendering of the digital ink representing the input. In one example, the mid-line of each character is used to align the characters with one another (described below with respect to FIG. 12), and to align those characters with the line pattern of the display, if present. In another example, the base-line is used in this way (described later with respect to FIG. 15). Other examples are possible however using other elements of the second geometrical information or combinations thereof.

FIG. 12 depicts an example alignment of each of the characters of the inputs 500, 600 and 700 based on the mid-line ML determined for each character. As can be seen, the alignment of the characters with respect to the first geometrical information, being the inter-character and inter-word spacings in the x-axis of the examples, is retained and each character is shifted in the y-axis of the examples to align the mid-lines ML with one another, thereby applying the second geometrical information, resulting in reconstructed input 1200.

In order to display the reconstructed input 1200 the ink management system 112 may cause the reconstructed input 1200 to be displayed as rendered digital ink as shown in FIG. 13 with respect to the line pattern 410 of the ink input and display area 400. In particular, the reconstructed input 1200 is rendered so that the mid-line ML is at an offset position to a line or lines of the line pattern 410.

This offset position may be pre-determined or settable (either by the ink management system 112 or by users, e.g., through the UI or the like) based on display or input parameters such as the line pattern 410 height (e.g., the vertical distance between the lines termed the line pattern unit (LPU)) with or without scaling of the digital ink, the size of the handwriting (raw ink) input (e.g., the LPU may be adjusted based on the raw ink height), typography conventions, or a combination thereof.

For example, (third) geometrical information of the line pattern 410 may be determined by the ink management system 112. The line pattern geometrical information includes at least top-, base- and mid-lines of the line pattern 410 as shown in FIG. 14. For example, the base-line BL of each line 410 of the line pattern is defined as that line 410, the top-line TL of each line 410 is defined as being at an (first) offset vertical distance from the base-line BL of that line 410 (e.g., between about 60% and about 80% of the LPU), and the mid-line ML of each line 410 is defined as being at an (second) offset vertical distance from the base-line BL (and/or top-line TL) of that line 410 (e.g., between about 30% and about 70% of the distance between the base-line BL and top-line TL). In this way, sufficient space for ascenders and descenders, upper casing, and grammatical symbols is provided.

Accordingly, in the example of FIG. 13, the mid-line ML of the reconstructed input 1200 is aligned with the mid-line ML of the line pattern 410. In this example, the size of the raw ink input may be such that the digital ink rendered therefrom fits within the LPU or the LPU is adjusted so that this occurs. Alternatively, or additionally, the digital ink may be scaled so as to fit within the LPU, where the LPU is pre-determined or adjustable only to a certain extent so as to provide sensible text display. Such scaling may be achieved, for example, by configuring the ink management system 112 as described in United States Patent Application No. 14/978,081 titled "System and Method of Beautifying Digital Ink" filed claiming a priority date of 8 December 2015 in the name of the present Applicant and Assignee,

As can be seen from FIG. 13, the correspondence of the characters with the line pattern 410 or more generally with a natural character alignment is enhanced for the reconstructed input 1200 with respect to the constructed input 1000 for the input of the present example. As such, the reconstructed input 1200 is not only legible and easily read by users as the question phrase "How are you?", but interaction with the reconstructed input 1200 is facilitated, such as the addition of non-superimposed handwritten input directly to the ink input and display area 400.

FIG. 15 depicts an example alignment of each of the characters of the inputs 500, 600 and 700 based on the base-line BL determined for each character. As can be seen, the alignment of the characters with respect to the first geometrical information, being the inter-character and inter-word spacings in the x-axis of the examples, is retained and each character is shifted in the y-axis of the examples to align the base-lines BL with one another, thereby applying the second geometrical information, resulting in reconstructed input 1500.

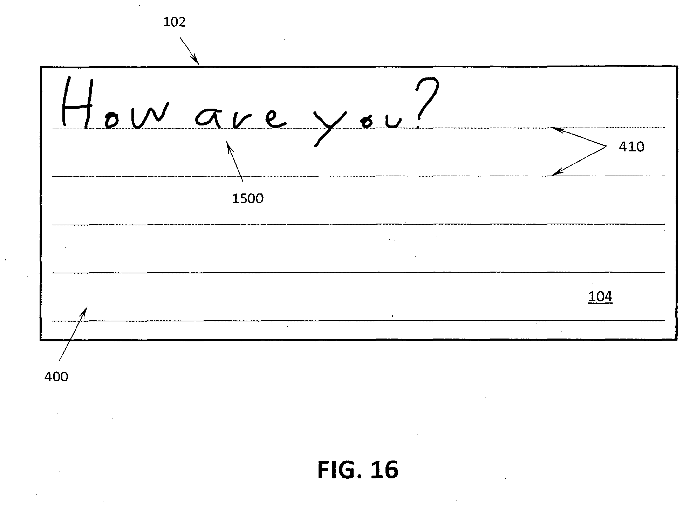

In order to display the reconstructed input 1500 the ink management system 112 may cause the reconstructed input 1500 to be displayed as rendered digital ink as shown in FIG. 16 with respect to the line pattern 410 of the ink input and display area 400. In particular, the reconstructed input 1500 is rendered so that the base-line BL is aligned with a line or lines of the line pattern 410, being the base-line(s) BL of the line pattern 410, as described above.

As can be seen from FIG. 16, the correspondence of the characters with the line pattern 410 or more generally with a natural character alignment is further enhanced for the reconstructed input 1500 as compared to the reconstructed input 1200 for the input of the present example. As before, this correspondence may be further enhanced through appropriate scaling of the digital ink. As such, the reconstructed input 1500 is not only legible and easily read by users as the question phrase "How are you?", but interaction with the reconstructed input 1500 is further facilitated, such as the addition of non-superimposed handwritten input directly to the ink input and display area 400.

In the afore-described examples, the alignment of the constructed and reconstructed inputs with respect to internal elements of the input and/or external elements to the input is based on one or more of the first, second and third geometrical information applied at the character level of the input. However, the level, including character, word, sentence, text line levels, at which these types of geometrical information are applied may be different to each other or for all, and may be pre-determined or settable via the UI or the like of the ink management system 112, for example.

The present system and method provides users with the ability to view their superimposed handwritten input in digital ink in a manner which allows handwriting recognition feedback and further input using superimposed or non-superimposed handwriting. This is achieved whilst retaining faithful reproduction of the original digital ink. Further, full interaction with the digital ink to edit or add to their handwriting at the level of characters, words, etc., is provided through processing the re-arranged digital ink as ink objects which uses at least aspects of handwriting recognition to provide the re-arrangement transformation or operation.

## Claims

1. A system for handwriting recognition of superimposed handwriting on computing devices, each computing device comprising a processor and at least one non-transitory computer readable medium for processing handwriting input under control of the processor, the at least one non-transitory computer readable medium configured to:
receive handwritten input as a plurality of at least partially superimposed input strokes;
recognize the input strokes of the handwritten input and recognize a plurality of characters formed thereby by:
forming, via a segmentation expert, element hypotheses by grouping consecutive strokes of the handwritten input to obtain a segmentation graph where each node corresponds to at least one element hypothesis;
outputting, via a recognition expert, a list of element candidates with probabilities or recognition scores for each node of the segmentation graph;
generating, via a language expert, linguistic meaning for the different paths in the segmentation graph using language models and finding the best recognition path;
determine first geometrical information of the plurality of characters defined by the handwriting input, wherein the first geometrical information is determined from widths of at least some of the characters;
determine a structuring transformation of the handwritten input in accordance with the first geometrical information to align the plurality of characters in non-superimposed order, wherein the structuring transformation is determined to include at least inter-character spacing between at least some of the characters, the inter-character spacing being defined by the determined widths; and
cause display of, on a display interface of the computing device, digital ink in accordance with the structuring transformation.

2. A system according to claim 1, wherein the structuring transformation is determined to include inter-word spacing between words defined by at least some of the characters, the inter-word spacing being defined by the determined widths.

3. A system according to any one of claims 1 to 2, the at least one non-transitory computer readable medium configured to determine second geometrical information of the characters,
wherein the structuring transformation is determined in accordance with the first and second geometrical information, wherein the second geometrical information is determined from typography parameters of at least some of the characters.

4. A system according to claim 3, the at least one non-transitory computer readable medium configured to determine third geometrical information of an alignment structure of the display interface,
wherein the structuring transformation is determined in accordance with the first, second and third geometrical information so that the digital ink is displayed in accordance with the alignment structure.

5. A system according to claim 4, wherein the alignment structure is a line pattern, and the third geometrical information is determined from typography parameters of the line pattern.

6. A method for handwriting recognition of superimposed handwriting on computing devices, each computing device comprising a processor and at least one non-transitory computer readable medium for processing handwriting input under control of the processor, the method comprising:
receiving handwritten input as a plurality of at least partially superimposed input strokes;
recognizing the input strokes of the handwritten input and recognizing a plurality of characters formed thereby by:
forming, via a segmentation expert, element hypotheses by grouping consecutive strokes of the handwritten input to obtain a segmentation graph where each node corresponds to at least one element hypothesis;
outputting, via a recognition expert, a list of element candidates with probabilities or recognition scores for each node of the segmentation graph;
generating, via a language expert, linguistic meaning for the different paths in the segmentation graph using language models and finding the best recognition path;
determining first geometrical information of a plurality of characters defined by the handwriting input, wherein the first geometrical information is determined from widths of at least some of the characters;
determining a structuring transformation of the handwritten input in accordance with the first geometrical information to align the plurality of characters in non-superimposed order, wherein the structuring transformation is determined to include at least inter-character spacing between at least some of the characters, the inter-character spacing being defined by the determined widths; and
displaying, on a display interface of the computing device, digital ink in accordance with the structuring transformation.

7. A method according to claim 6, wherein the structuring transformation is determined to include inter-word spacing between words defined by at least some of the characters, the inter-word spacing being defined by the determined widths.

8. A method according to claim 6, further comprising determining second geometrical information of the characters,
wherein the structuring transformation is determined in accordance with the first and second geometrical information, wherein the second geometrical information is determined from typography parameters of at least some of the characters.

9. A method according to claim 8, further comprising determining third geometrical information of an alignment structure of the display interface,
wherein the structuring transformation is determined in accordance with the first, second and third geometrical information so that the digital ink is displayed in accordance with the alignment structure.

10. A method according to claim 9, wherein the alignment structure is a line pattern, and the third geometrical information is determined from typography parameters of the line pattern.

11. A non-transitory computer readable medium having a computer readable program code embodied therein, said computer readable program code adapted to be executed to implement a method for handwriting recognition of superimposed handwriting on a computing device, the computing device comprising a processor and at least one system non-transitory computer readable medium for processing handwriting input under control of the processor, the method comprising:
receiving handwritten input as a plurality of at least partially superimposed input strokes;
recognizing the input strokes of the handwritten input and recognizing a plurality of characters formed thereby by:
forming, via a segmentation expert, element hypotheses by grouping consecutive strokes of the handwritten input to obtain a segmentation graph where each node corresponds to at least one element hypothesis;
outputting, via a recognition expert, a list of element candidates with probabilities or recognition scores for each node of the segmentation graph;
generating, via a language expert, linguistic meaning for the different paths in the segmentation graph using language models and finding the best recognition path;
determining first geometrical information of a plurality of characters defined by the handwriting input, wherein the first geometrical information is determined from widths of at least some of the characters;
determining a structuring transformation of the handwritten input in accordance with the first geometrical information to align the plurality of characters in non-superimposed order, wherein the structuring transformation is determined to include at least inter-character spacing between at least some of the characters, the inter-character spacing being defined by the determined widths; and
displaying, on a display interface of the computing device, digital ink in accordance with the structuring transformation.

12. A non-transitory computer readable medium according to claim 11, wherein the structuring transformation is determined to include inter-word spacing between words defined by at least some of the characters, the inter-word spacing being defined by the determined widths.

13. A non-transitory computer readable medium according to claim 11, further comprising determining second geometrical information of the characters, wherein the structuring transformation is determined in accordance with the first and second geometrical information, wherein the second geometrical information is determined from typography parameters of at least some of the characters.

14. A non-transitory computer readable medium according to claim 13, further comprising determining third geometrical information of an alignment structure of the display interface,
wherein the structuring transformation is determined in accordance with the first, second and third geometrical information so that the digital ink is displayed in accordance with the alignment structure.

15. A non-transitory computer readable medium according to claim 14, wherein the alignment structure is a line pattern, and the third geometrical information is determined from typography parameters of the line pattern.

## Patentansprüche

1. System zur Handschrifterkennung von überlagerter Handschrift auf Rechenvorrichtungen, wobei jede Rechenvorrichtung einen Prozessor und zumindest ein nichtflüchtiges computerlesbares Medium zur Verarbeitung einer handschriftlichen Eingabe unter der Steuerung des Prozessors aufweist, wobei das zumindest eine nichtflüchtige computerlesbare Medium konfiguriert ist:
eine handschriftliche Eingabe als Vielzahl von zumindest teilweise überlagerten Eingabestrichen zu empfangen;
die Eingabestriche der handschriftlichen Eingabe zu erkennen und eine Vielzahl von dadurch gebildeten Zeichen zu erkennen durch:
Bilden, über einen Segmentierungsexperten, von Elementhypothesen durch Gruppieren aufeinanderfolgender Striche der handschriftlichen Eingabe, um einen Segmentierungsgraphen zu erhalten, in dem jeder Knoten zumindest einer Elementhypothese entspricht;
Ausgeben, über einen Erkennungsexperten, einer Liste von Elementkandidaten mit Wahrscheinlichkeiten oder Erkennungswertungen für jeden Knoten des Segmentierungsgraphen;
Erzeugen, über einen Sprachexperten, einer linguistischen Bedeutung für die unterschiedlichen Wege in dem Segmentierungsgraphen unter Verwendung von Sprachmodellen und Finden des besten Erkennungswegs;
erste geometrische Informationen der Vielzahl von Zeichen zu bestimmen, die durch die handschriftliche Eingabe definiert sind, wobei die ersten geometrischen Informationen anhand von Breiten zumindest mancher der Zeichen bestimmt wird;
eine Strukturierungsumwandlung der handschriftlichen Eingabe gemäß den ersten geometrischen Informationen zu bestimmen, um die Vielzahl von Zeichen in einer nichtüberlagerten Reihenfolge auszurichten, wobei die Strukturierungsumwandlung bestimmt wird, um zumindest einen Zwischenzeichenabstand zwischen zumindest manchen der Zeichen zu umfassen, wobei der Zwischenzeichenabstand durch die bestimmten Breiten definiert ist; und
eine Anzeige von digitaler Tinte gemäß der Strukturierungsumwandlung auf einer Anzeigeschnittstelle der Rechenvorrichtung zu veranlassen.

2. System nach Anspruch 1, wobei die Strukturierungsumwandlung bestimmt wird, um einen Zwischenwortabstand zwischen Wörtern zu umfassen, die durch zumindest manche der Zeichen definiert sind, wobei der Zwischenwortabstand durch die bestimmten Breiten definiert ist.

3. System nach einem der Ansprüche 1 bis 2, wobei das zumindest eine nichtflüchtige computerlesbare Medium konfiguriert ist, zweite geometrische Informationen der Zeichen zu bestimmen,
wobei die Strukturierungsumwandlung gemäß den ersten und den zweiten geometrischen Informationen bestimmt wird, wobei die zweiten geometrischen Informationen aus typografischen Parametern zumindest mancher der Zeichen bestimmt werden.

4. System nach Anspruch 3, wobei das zumindest eine nichtflüchtige computerlesbare Medium konfiguriert ist, dritte geometrische Informationen einer Ausrichtungsstruktur der Anzeigeschnittstelle zu bestimmen,
wobei die Strukturierungsumwandlung gemäß den ersten, den zweiten und den dritten geometrischen Informationen bestimmt wird, sodass die digitale Tinte gemäß der Ausrichtungsstruktur angezeigt wird.

5. System nach Anspruch 4, wobei die Ausrichtungsstruktur ein Linienmuster ist und die dritten geometrischen Informationen aus typografischen Parametern des Linienmusters bestimmt werden.

6. Verfahren zur Handschrifterkennung von überlagerter Handschrift auf Rechenvorrichtungen, wobei jede Rechenvorrichtung einen Prozessor und zumindest ein nichtflüchtiges computerlesbares Medium zur Verarbeitung einer handschriftlichen Eingabe unter der Steuerung des Prozessors aufweist, wobei das Verfahren umfasst:
Empfangen einer handschriftlichen Eingabe als Vielzahl von zumindest teilweise überlagerten Eingabestrichen;
Erkennen der Eingabestriche der handschriftlichen Eingabe und Erkennen einer Vielzahl von dadurch gebildeten Zeichen durch:
Bilden, über einen Segmentierungsexperten, von Elementhypothesen durch Gruppieren aufeinanderfolgender Striche der handschriftlichen Eingabe, um einen Segmentierungsgraphen zu erhalten, in dem jeder Knoten zumindest einer Elementhypothese entspricht;
Ausgeben, über einen Erkennungsexperten, einer Liste von Elementkandidaten mit Wahrscheinlichkeiten oder Erkennungswertungen für jeden Knoten des Segmentierungsgraphen;
Erzeugen, über einen Sprachexperten, einer linguistischen Bedeutung für die unterschiedlichen Wege in dem Segmentierungsgraphen unter Verwendung von Sprachmodellen und Finden des besten Erkennungswegs;
Bestimmen von ersten geometrischen Informationen einer Vielzahl von Zeichen, die durch die handschriftliche Eingabe definiert sind, wobei die ersten geometrischen Informationen aus Breiten zumindest mancher der Zeichen bestimmt werden;
Bestimmen einer Strukturierungsumwandlung der handschriftlichen Eingabe gemäß den ersten geometrischen Informationen, um die Vielzahl von Zeichen in einer nichtüberlagerten Reihenfolge auszurichten, wobei die Strukturierungsumwandlung bestimmt wird, um zumindest einen Zwischenzeichenabstand zwischen zumindest manchen der Zeichen zu umfassen, wobei der Zwischenzeichenabstand durch die bestimmten Breiten definiert ist; und
Anzeigen von digitaler Tinte gemäß der Strukturierungsumwandlung auf einer Anzeigeschnittstelle der Rechenvorrichtung.

7. Verfahren nach Anspruch 6, wobei die Strukturierungsumwandlung bestimmt wird, um einen Zwischenwortabstand zwischen Wörtern zu umfassen, die durch zumindest manche der Zeichen definiert sind, wobei der Zwischenwortabstand durch die bestimmten Breiten definiert ist.

8. Verfahren nach Anspruch 6, ferner umfassend Bestimmen von zweiten geometrischen Informationen der Zeichen,
wobei die Strukturierungsumwandlung gemäß den ersten und den zweiten geometrischen Informationen bestimmt wird, wobei die zweiten geometrischen Information aus typografischen Parametern zumindest mancher der Zeichen bestimmt werden.

9. Verfahren nach Anspruch 8, ferner umfassend Bestimmen von dritten geometrischen Informationen einer Ausrichtungsstruktur der Anzeigeschnittstelle,
wobei die Strukturierungsumwandlung gemäß den ersten, den zweiten und den dritten geometrischen Informationen bestimmt wird, sodass die digitale Tinte gemäß der Ausrichtungsstruktur angezeigt wird.

10. Verfahren nach Anspruch 9, wobei die Ausrichtungsstruktur ein Linienmuster ist und die dritten geometrischen Informationen aus typografischen Parametern des Linienmusters bestimmt werden.

11. Nichtflüchtiges computerlesbares Medium mit einem darauf realisierten computerlesbaren Programmcode, wobei der computerlesbare Programmcode eingerichtet ist, ausgeführt zu werden, um ein Verfahren zur Handschrifterkennung von überlagerter Handschrift auf einer Rechenvorrichtung zu implementieren, wobei die Rechenvorrichtung einen Prozessor und zumindest ein nichtflüchtiges computerlesbares System-Medium zur Verarbeitung einer handschriftlichen Eingabe unter der Steuerung des Prozessors aufweist, wobei das Verfahren umfasst:
Empfangen einer handschriftlichen Eingabe als Vielzahl von zumindest teilweise überlagerten Eingabestrichen;
Erkennen der Eingabestriche der handschriftlichen Eingabe und Erkennen einer Vielzahl von dadurch gebildeten Zeichen durch:
Bilden, über einen Segmentierungsexperten, von Elementhypothesen durch Gruppieren aufeinanderfolgender Striche der handschriftlichen Eingabe, um einen Segmentierungsgraphen zu erhalten, in dem jeder Knoten zumindest einer Elementhypothese entspricht;
Ausgeben, über einen Erkennungsexperten, einer Liste von Elementkandidaten mit Wahrscheinlichkeiten oder Erkennungswertungen für jeden Knoten des Segmentierungsgraphen;
Erzeugen, über einen Sprachexperten, einer linguistischen Bedeutung für die unterschiedlichen Wege in dem Segmentierungsgraphen unter Verwendung von Sprachmodellen und Finden des besten Erkennungswegs;
Bestimmen von ersten geometrischen Informationen einer Vielzahl von Zeichen, die durch die handschriftliche Eingabe definiert sind, wobei die ersten geometrischen Informationen aus Breiten zumindest mancher der Zeichen bestimmt werden;
Bestimmen einer Strukturierungsumwandlung der handschriftlichen Eingabe gemäß den ersten geometrischen Informationen, um die Vielzahl von Zeichen in einer nichtüberlagerten Reihenfolge auszurichten, wobei die Strukturierungsumwandlung bestimmt wird, um zumindest einen Zwischenzeichenabstand zwischen zumindest manchen der Zeichen zu umfassen, wobei der Zwischenzeichenabstand durch die bestimmten Breiten definiert ist; und
Anzeigen von digitaler Tinte gemäß der Strukturierungsumwandlung auf einer Anzeigeschnittstelle der Rechenvorrichtung.

12. Nichtflüchtiges computerlesbares Medium nach Anspruch 11, wobei die Strukturierungsumwandlung bestimmt wird, um einen Zwischenwortabstand zwischen Wörtern zu umfassen, die durch zumindest manche der Zeichen definiert sind, wobei der Zwischenwortabstand durch die bestimmten Breiten definiert ist.

13. Nichtflüchtiges computerlesbares Medium nach Anspruch 11, ferner umfassend Bestimmen von zweiten geometrischen Informationen der Zeichen, wobei die Strukturierungsumwandlung gemäß den ersten und den zweiten geometrischen Informationen bestimmt wird, wobei die zweiten geometrischen Informationen aus typografischen Parametern zumindest mancher der Zeichen bestimmt werden.

14. Nichtflüchtiges computerlesbares Medium nach Anspruch 13, ferner umfassend Bestimmen von dritten geometrischen Informationen einer Ausrichtungsstruktur der Anzeigeschnittstelle,
wobei die Strukturierungsumwandlung gemäß den ersten, den zweiten und den dritten geometrischen Informationen bestimmt wird, sodass die digitale Tinte gemäß der Ausrichtungsstruktur angezeigt wird.

15. Nichtflüchtiges computerlesbares Medium nach Anspruch 14, wobei die Ausrichtungsstruktur ein Linienmuster ist und die dritten geometrischen Informationen aus typografischen Parametern des Linienmusters bestimmt werden.

## Revendications

1. Système de reconnaissance d'écriture manuscrite superposée sur des dispositifs informatiques, chaque dispositif informatique comprenant un processeur et au moins un support non transitoire lisible par ordinateur pour traiter l'entrée d'écriture manuscrite sous le contrôle du processeur, l'au moins un support non transitoire lisible par ordinateur étant configuré pour :
recevoir une entrée manuscrite sous la forme d'une pluralité de traits d'entrée au moins partiellement superposés ;
reconnaître les traits d'entrée de l'entrée manuscrite et reconnaître une pluralité de caractères ainsi formés en :
formant, via un expert en segmentation, des hypothèses d'éléments en regroupant des traits consécutifs de l'entrée manuscrite pour obtenir un graphe de segmentation où chaque noeud correspond à au moins une hypothèse d'élément ;
produisant, via un expert en reconnaissance, une liste d'éléments candidats avec des probabilités ou des scores de reconnaissance pour chaque noeud du graphe de segmentation ;
générant, via un expert en langage, une signification linguistique pour les différents chemins dans le graphe de segmentation en utilisant des modèles de langage et en trouvant le meilleur chemin de reconnaissance ;
déterminer une première information géométrique de la pluralité de caractères définis par l'entrée manuscrite, la première information géométrique étant déterminée à partir de largeurs d'au moins certains des caractères ;
déterminer une transformation de structuration de l'entrée manuscrite en fonction de la première information géométrique afin d'aligner la pluralité de caractères dans un ordre non superposé, la transformation de structuration étant déterminée pour inclure au moins l'espacement inter-caractères entre au moins certains des caractères, l'espacement inter-caractères étant défini par les largeurs déterminées ; et
provoquer l'affichage, sur une interface d'affichage du dispositif informatique, d'encre numérique en fonction de la transformation de structuration.

2. Système selon la revendication 1, dans lequel la transformation de structuration est déterminée pour inclure l'espacement inter-mots entre les mots définis par au moins certains des caractères, l'espacement inter-mots étant défini par les largeurs déterminées.

3. Système selon l'une quelconque des revendications 1 à 2, l'au moins un support non transitoire lisible par ordinateur étant configuré pour déterminer une deuxième information géométrique des caractères,
dans lequel la transformation de structuration est déterminée en fonction de la première et de la deuxième information géométrique, dans lequel la deuxième information géométrique est déterminée à partir de paramètres de typographie d'au moins certains des caractères.

4. Système selon la revendication 3, l'au moins un support non transitoire lisible par ordinateur étant configuré pour déterminer une troisième information géométrique d'une structure d'alignement de l'interface d'affichage,
dans lequel la transformation de structuration est déterminée en fonction de la première, de la deuxième et de la troisième information géométrique afin que l'encre numérique soit affichée en fonction de la structure d'alignement.

5. Système selon la revendication 4, dans lequel la structure d'alignement est un motif de ligne, et la troisième information géométrique est déterminée à partir de paramètres de typographie du motif de ligne.

6. Procédé de reconnaissance d'écriture manuscrite superposée sur des dispositifs informatiques, chaque dispositif informatique comprenant un processeur et au moins un support non transitoire lisible par ordinateur pour traiter l'entrée d'écriture manuscrite sous le contrôle du processeur, le procédé comprenant :
la réception d'une entrée manuscrite sous la forme d'une pluralité de traits d'entrée au moins partiellement superposés ;
la reconnaissance des traits d'entrée de l'entrée manuscrite et la reconnaissance d'une pluralité de caractères ainsi formés en :
formant, via un expert en segmentation, des hypothèses d'éléments en regroupant des traits consécutifs de l'entrée manuscrite pour obtenir un graphe de segmentation où chaque noeud correspond à au moins une hypothèse d'élément ;
produisant, via un expert en reconnaissance, une liste d'éléments candidats avec des probabilités ou des scores de reconnaissance pour chaque noeud du graphe de segmentation ;
générant, via un expert en langage, une signification linguistique pour les différents chemins dans le graphe de segmentation en utilisant des modèles de langage et en trouvant le meilleur chemin de reconnaissance ;
la détermination d'une première information géométrique d'une pluralité de caractères définis par l'entrée manuscrite, la première information géométrique étant déterminée à partir de largeurs d'au moins certains des caractères ;
la détermination d'une transformation de structuration de l'entrée manuscrite en fonction de la première information géométrique afin d'aligner la pluralité de caractères dans un ordre non superposé, la transformation de structuration étant déterminée pour inclure au moins l'espacement inter-caractères entre au moins certains des caractères, l'espacement inter-caractères étant défini par les largeurs déterminées ; et
l'affichage, sur une interface d'affichage du dispositif informatique, d'encre numérique en fonction de la transformation de structuration.

7. Procédé selon la revendication 6, dans lequel la transformation de structuration est déterminée pour inclure l'espacement inter-mots entre les mots définis par au moins certains des caractères, l'espacement inter-mots étant défini par les largeurs déterminées.

8. Procédé selon la revendication 6, comprenant en outre la détermination d'une deuxième information géométrique des caractères,
dans lequel la transformation de structuration est déterminée en fonction de la première et de la deuxième information géométrique, dans lequel la deuxième information géométrique est déterminée à partir de paramètres de typographie d'au moins certains des caractères.

9. Procédé selon la revendication 8, comprenant en outre la détermination d'une troisième information géométrique d'une structure d'alignement de l'interface d'affichage,
dans lequel la transformation de structuration est déterminée en fonction de la première, de la deuxième et de la troisième information géométrique de telle sorte que l'encre numérique est affichée en fonction de la structure d'alignement.

10. Procédé selon la revendication 9, dans lequel la structure d'alignement est un motif de ligne, et la troisième information géométrique est déterminée à partir de paramètres de typographie du motif de ligne.

11. Support non transitoire lisible par ordinateur dans lequel un code de programme lisible par ordinateur est incorporé, ledit code de programme lisible par ordinateur étant adapté pour être exécuté pour mettre en oeuvre un procédé de reconnaissance d'écriture manuscrite superposée sur un dispositif informatique, le dispositif informatique comprenant un processeur et au moins un support non transitoire lisible par ordinateur du système pour traiter l'entrée d'écriture manuscrite sous le contrôle du processeur, le procédé comprenant :
la réception d'une entrée manuscrite sous la forme d'une pluralité de traits d'entrée au moins partiellement superposés ;
la reconnaissance des traits d'entrée de l'entrée manuscrite et la reconnaissance d'une pluralité de caractères ainsi formés en :
formant, via un expert en segmentation, des hypothèses d'éléments en regroupant des traits consécutifs de l'entrée manuscrite pour obtenir un graphe de segmentation où chaque noeud correspond à au moins une hypothèse d'élément ;
produisant, via un expert en reconnaissance, une liste d'éléments candidats avec des probabilités ou des scores de reconnaissance pour chaque noeud du graphe de segmentation ;
générant, via un expert en langage, une signification linguistique pour les différents chemins dans le graphe de segmentation en utilisant des modèles de langage et en trouvant le meilleur chemin de reconnaissance ;
la détermination d'une première information géométrique d'une pluralité de caractères définis par l'entrée manuscrite, la première information géométrique étant déterminée à partir de largeurs d'au moins certains des caractères ;
la détermination d'une transformation de structuration de l'entrée manuscrite en fonction de la première information géométrique afin d'aligner la pluralité de caractères dans un ordre non superposé, la transformation de structuration étant déterminée pour inclure au moins l'espacement inter-caractères, l'espacement inter-caractères étant défini par les largeurs déterminées ; et
l'affichage, sur une interface d'affichage du dispositif informatique, d'encre numérique en fonction de la transformation de structuration.

12. Support non transitoire lisible par ordinateur selon la revendication 11, dans lequel la transformation de structuration est déterminée pour inclure l'espacement inter-mots entre les mots définis par au moins certains des caractères, l'espacement inter-mots étant défini par les largeurs déterminées.

13. Support non transitoire lisible par ordinateur selon la revendication 11, comprenant en outre la détermination d'une deuxième information géométrique des caractères, dans lequel la transformation de structuration est déterminée en fonction de la première et de la deuxième information géométrique, dans lequel la deuxième information géométrique est déterminée à partir de paramètres de typographie d'au moins certains des caractères.

14. Support non transitoire lisible par ordinateur selon la revendication 13, comprenant en outre la détermination d'une troisième information géométrique d'une structure d'alignement de l'interface d'affichage,
dans lequel la transformation de structuration est déterminée en fonction de la première, de la deuxième et de la troisième information géométrique de telle sorte que l'encre numérique est affichée en fonction de la structure d'alignement.

15. Support non transitoire lisible par ordinateur selon la revendication 14, dans lequel la structure d'alignement est un motif de ligne, et la troisième information géométrique est déterminée à partir des paramètres de typographie du motif de ligne.
